Europäisches Patentamt

European Patent Office

Office européen des brevets

(11) Veröffentlichungsnummer : **0 062 812**
**B1**

# (12) EUROPÄISCHE PATENTSCHRIFT

(45) Veröffentlichungstag der Patentschrift :
07.08.85

(21) Anmeldenummer : 82102555.8

(22) Anmeldetag : 26.03.82

(51) Int. Cl.⁴ : **B 05 D 7/22**, B 05 C 7/04,
A 22 C 13/00

(54) Verfahren zur Innenbeschichtung eines Schlauchs sowie Anordnung zur Durchführung des Verfahrens.

(30) Priorität : 07.04.81 DE 3113959

(43) Veröffentlichungstag der Anmeldung :
20.10.82 Patentblatt 82/42

(45) Bekanntmachung des Hinweises auf die Patenterteilung : 07.08.85 Patentblatt 85/32

(84) Benannte Vertragsstaaten :
AT BE CH DE FR GB IT LI LU NL SE

(56) Entgegenhaltungen :
EP-A- 0 037 023
EP-A- 0 037 024
EP-A- 0 037 494
DE-A- 2 557 994
DE-A- 2 801 038
DE-A- 2 856 253
GB-A- 526 493

(73) Patentinhaber : HOECHST AKTIENGESELLSCHAFT
Postfach 80 03 20
D-6230 Frankfurt am Main 80 (DE)

(72) Erfinder : Kälberer, Heinz, Dr.
Paradiesstrasse 51
D - 6229 Walluf (DE)
Erfinder : Wolf, Hans
Obentrautstrasse 13
D - 6507 Ingelheim 4 (DE)

## Beschreibung

Die Erfindung bezieht sich auf ein Verfahren zur Innenbeschichtung eines insbesondere faserverstärkten Schlauchs auf Basis von Cellulosehydrat von der im Oberbegriff des Anspruchs 1 genannten Art sowie auf eine Anordnung zur Durchführung dieses Verfahrens.

Es ist bereits bekannt (DE-A-2 801 038), einen endlosen Schlauch aus einer Kunststoffolie oder einem dichten Gewebe in der Weise auf seiner Innenseite zu beschichten, daß man ihn mit einem Vorrat an flüssigem Beschichtungsmaterial befüllt und danach durch ein Quetschwalzenpaar hindurchzieht, das so eingestellt ist, daß die Masse des Beschichtungsmaterials von den Quetschwalzen zurückgehalten wird und nur ein dünner Film aus dem Beschichtungsmaterial auf der Innenseite des Schlauchs die Quetschwalzen passiert. Vor dem Quetschwalzenpaar ist eine Anzahl von Leitwalzen hintereinander angeordnet, um die der Schlauch herumgeführt wird. Erst danach wird er durch das Quetschwalzenpaar hindruchgeführt, welches für die Dicke der Innenbeschichtung maßgeblich ist.

Dieses bekannte Verfahren ist verhältnismäßig aufwendig, da die Breite des Spalts zwischen den beiden Quetschwalzen sehr genau eingestellt werden muß ; kleinste Unebenheiten oder Verschmutzungen der Walzenoberfläche oder Dickenschwankungen im Schlauchmaterial führen zu einer ungleichmäßigen Beschichtung.

Eine Anordnung zur Innenbeschichtung von Schläuchen wird in der EP-A-37 024 beschrieben, die unter Art. 54 (3) EPÜ fällt. Nach diesem Dokument wird der Schlauch geradlinig durch eine Dosiereinrichtung hindurchgezogen.

Durch die EP-A-37 024 ist ein Verfahren zur Innenbeschichtung eines insbesondere faserverstärkten Schlauchs auf Basis von Cellulosehydrat bekannt, bei dem der mit einer Menge Beschichtungsflüssigkeit im unteren Teil gefüllte Schlauch mit stetiger Geschwindigkeit längsaxial vertikal von unten nach oben fortbewegt wird, der Schlauch oberhalb des Spiegels der Beschichtungsflüssigkeit mit Stützgas gefüllt ist und auf seiner Innenseite eine relativ dicke Schicht aus Beschichtungsflüssigkeit aufweist, der mit Stützgas gefüllte Schlauch in der flachgelegten Zustand überführt und im flachgelegten Zustand durch eine Dosiereinrichtung geführt wird, die so eingestellt ist, daß die Hauptmenge der auf der Innenseite des flachgelegten Schlauchs vorhandenen Beschichtungsflüssigkeit zurückgehalten wird und ein Film von nur geringer Dicke aus Beschichtungsflüssigkeit auf der Innenseite des aus der Dosiereinrichtung austretenden Schlauchs ausgebildet wird, der Schlauch anschließend erneut mit Stützgas gefüllt weiterhin vertikal in Richtung von unten nach oben geführt und der Einwirkung von Wärme unterworfen wird, wobei die flüchtigen Anteile der Beschichtugsflüssigkeit entfernt werden und sich ein Überzug auf der Schlauchinnenseite ausbildet, und gegebenenfalls der Schlauch nach dem Trocknen mit Wasser befeuchtet wird.

Es ist deshalb Aufgabe der Erfindung, ein Verfahren und eine Anordnung vorzuschlagen, welche eine weniger störanfällige Innenbeschichtung eines Schlauchs auf Basis von Cellulosehydrat gestatten, die einfacher zu handhaben sind und die ohne großen technischen Aufwand eine gleichmäßige Innenbeschichtung ermöglichen.

Diese Aufgabe wird gelöst durch das im Anspruch 1 angegebene Verfahren und durch die im Anspruch 6 genannte Anordnung. Die Unteransprüche betreffen weitere Ausführungsformen des Verfahrens und der Anordnung.

Unter einem Schlauch auf Basis von Cellulosehydrat ist sowohl ein Schlauch zu verstehen, der durch Koagulation von Viskose hergestellt ist und aus noch nicht-getrocknetem Cellulosehydrat-Gel besteht als auch ein getrockneter, gegebenenfalls wieder angefeuchteter Schlauch aus Cellulosehydrat, der einen Wassergehalt von etwa 5 bis 15 Gew.% aufweist. Der Schlauch ist insbesondere faserverstärkt, d. h. er enthält in seiner Wandung eine eingelagerte übliche Faserbahn, z. B. aus Papier. Ferner enthält der Schlauch ein an sich bekanntes Weichmachungsmittel, insbesondere Glycerin.

Die Schlauchdicke kann in weiten Bereichen variieren. Für die Herstellung von künstlichen Wursthüllen werden Schläuche mit üblichen Wanddicken von 30 bis 300 μm, insbesondere 80 bis 120 μm verwendet.

Das Wasserrückhaltevermögen des Schlauchs beträgt vorzugsweise 120 bis 140 Gew.% (DIN 53 814).

Als Beschichtungsflüssigkeit wird beispielsweise eine Kunststofflösung oder eine Kunststoffdispersion eingesetzt, die einen thermoplastischen Kunststoff in einer Konzentration von 15 bis 60 Gew.%, insbesondere 15 bis 30 Gew.%, enthält. Der thermoplastische Kunststoff ist beispielsweise ein Vinylidenchloridcopolymerisat mit einem Vinylidenchlorid-Anteil von größer als 80 Gew.%.

Der Cellulosehydratschlauch nimmt aus dieser Dispersion während der Zeitdauer, in der er mit der Dispersion in Kontakt tritt, im Verhältnis zu seinem Wasserrückhaltevermögen eine nur geringe Menge Wasser auf. Vorzugsweise beträgt diese Wassermenge nur 20 bis 30 % des Wasserrückhaltevermögens des Schlauchs. Infolgedessen ist die zur Vertreibung des Wassers aus dem auf der Innenwand aufgebrachten Film in der Trockenvorrichtung erforderliche Energiemenge wesentlich geringer als bei den bekannten Innenbeschichtungsverfahren, bei denen wegen der relativ niedrigen Konzentration der Dispersion der Wasseranteil sehr hoch ist. Das Verfahren erlaubt außerdem wegen der geringen Menge des zu vertreibenden Wassers aus der flüssigen Schicht auf der Schlauchinnenseite eine erhebliche Steigerung der Beschichtungsgeschwindigkeit. Da die gesamte Wassermenge der flüssigen Schicht durch Diffusion durch die Schlauchwand nach außen abtransportiert werden muß, bestimmt der Wasseranteil wesentlich die Geschwindigkeit, mit der das Beschichtungsverfahren durchführbar ist.

Ferner zeigt das vorliegende Verfahren gegenüber dem Stand der Technik den Vorteil, daß die wäßrige Kunststoffdispersion oder die Kunststoflösung auf der Schlauchinnenseite infolge ihrer viskositätsbedingten Fließfähigkeit besonders gleichmäßig auf der Schlauchoberfläche verläuft.

Vorzugsweise wird der Schlauch mit einer Geschwindigkeit von 8 bis 60, insbesondere 15 bis 30 m/min. fortbewegt.

Das Flächengewicht der auf der Schlauchinnenseite vollflächig erzeugten Kunststoffschicht liegt im üblichen Bereich, nämlich bei 6 bis 20 g Kunststoff pro m² Substratoberfläche, insbesondere bei 8 bis 15 g.

Dispersionen und Lösungen mit hoher Kunststoffkonzentration zur Innenbeschichtung von Cellulosehydratschläuchen wurden bei den bisherigen Verfahren nicht verwendet, da wegen der höheren Viskosität zu erwarten ist, daß keine gleichmäßige Schichtausbildung erfolgt und die Schichtdicke zu hoch wird.

Geeignete Kunststoffe sind beispielsweise Vinylidenchlorid-Einheiten enthaltende Copolymerisate, die im Schlauchinneren nach Verdampfen der flüchtigen Anteile eine für Wasserdampf und Sauerstoff praktisch undurchlässige Schicht ausbilden. Als haftvermittelnde Schicht zur Verankerung des Kunststoffs auf der Schlauchinnenwand werden für diesen Zweck an sich bekannte Verbindungen vor Beginn des Verfahrens auf die Innenwand des Schlauchs aufgebracht, z. B. durch Wärmehärtung gebildete wasserunlösliche Reaktionsprodukte von Epichlorhydrin mit einem Polyaminoamid.

Der untere Teil des Schlauchs, der mit Beschichtungsflüssigkeit gefüllt ist, zeigt vorzugsweise die Form einer Schlaufe. Diese wird gebildet durch einen von oben nach unten sich erstreckenden Schlauchteil, einen anschließenden, z. B. durch eine Umlenkrolle umgelenkten Schlauchteil und einen folgenden von unten nach oben geführten Schlauchteil. Der von oben nach unten sich erstreckende Schlauchteil wird vertikal oder in schräger Richtung geführt.

Oberhalb des Spiegels der Beschichtungsflüssigkeit ist der Schlauch auf seiner Innenseite mit einer relativ dicken Schicht aus Beschichtungsflüssigkeit beschichtet und mit Stützgas, insbesondere Luft, gefüllt. Der Druck des Stützgases gewährleistet, daß der Schlauch einen kreisförmigen bzw. praktisch kreisförmigen Querschnitt zeigt. Gegebenenfalls vermag das Stützgas in geringem Maße radiale Dehnung des Schlauchs zu bewirken. In diesem Bereich wird er stetig zunehmend abgeflacht und allmählich von aufgeblasenen, im Querschnitt kreisförmigen Zustand in den flachgelegten Zustand unter Faltenbildung verhindernden Bedingungen übergeführt, wobei hierzu Einrichtungen verwendet werden, die z. B. zum faltenfreien Flachlegen von extrudierten Kunststoffschläuchen bei ihrer Herstellung üblich sind, wie beispielsweise Leitbleche, Leitwalzen, Rollenbahnen oder Förderbänder.

Im flachgelegten Zustand wird der Schlauch nun durch die Dosiereinrichtung gezogen, die so eingestellt ist, daß die Hauptmenge der auf der Innenwand des flachgelegten Schlauchs vorhandenen Beschichtungsflüssigkeit zurückgehalten wird und ein ununterbrochener, geschlossener Film von nur geringer Dicke aus Beschichtungsflüssigkeit auf der Innenwand des aus der Dosiereinrichtung austretenden Schlauchs ausgebildet wird.

Die Dosiereinrichtung besteht aus mindestens zwei in der Laufrichtung des Schlauchs übereinander angeordneten Abstreifern, in Form von Rakeln oder Walzen, welche jeweils abwechselnd auf den beiden Außenseiten des flachgelegten Schlauchs eng anliegen. Der flachgelegte Schlauch wird mäanderförmig in vorzugsweise reibschlüssigem Kontakt an den Abstreifern vorbeigeführt, wobei seine beiden Außenseiten abwechselnd an benachbarten Abstreifern vorbeigleiten. Die Oberflächen der Abstreifer, mit welchen der Schlauch unter teilweiser Umschlingung in Kontakt tritt, sind in vertikaler Richtung gebogen ausgebildet, wobei der Radius der Biegung umso kleiner ist je kleiner der Winkel ist, unter dem der Schlauch um den Abstreifer herumgeführt wird.

Der Anpreßdruck zwischen Schlauch und Abstreifern muß so hoch gewählt werden, daß das oberhalb und unterhalb der Dosiereinrichtung im Schlauch vorhandene Stützgas nicht in den die Dosiereinrichtung durchlaufenden flachliegenden Schlauchteil eindringen kann. Das fortlaufende Hindurchführen des Schlauchs durch die Dosiereinrichtung führt in Abhängigkeit von der Fortbewegungsgeschwindigkeit des Schlauchs und der Konzentration der Beschichtungsflüssigkeit zu einem Anstau der Beschichtungsflüssigkeit unmittelbar vor dem ersten Abstreifer. Die Beschichtungsdicke des die Dosiereinrichtung verlassenden Schlauchs ist geringer als vor Eintritt des Schlauchs in die Dosiereinrichtung. Die Abstimmung von Fortbewegungsgeschwindigkeit und Konzentration der Beschichtungsflüssigkeit zur Erzielung eines bestimmten Flächengewichts des resultierenden Filmüberzugs auf der Schlauchinnenseite kann für den jeweiligen Fall durch wenige und einfache Vorversuche ermittelt werden.

Vorzugsweise zeigt mindestens einer der Abstreifer, insbesondere der erste und/oder der letzte, die Form einer Walze, die vorteilhafterweise rotierbar ausgebildet ist. Die Walze(n) kann (können) antreibbar ausgebildet sein und zeigen eine glatte oder eine profiliert ausgebildete Oberfläche.

Der Schlauch wird um die Walzen bzw. Rakel mäanderförmig unter teilweiser Umschlingung des jeweiligen Walzenumfangs geführt.

Die Abstreifer sind formfest und bestehen aus einem Material, das ihnen ausreichende Formbeständigkeit verleiht, beispielsweise aus Metall oder Kunststoff.

Nach der Dosiereinrichtung wird der flachgelegte Schlauch erneut in den mit Stützgas gefüllten Zustand übergeführt, gegebenenfalls mit Hilfe einer Einrichtung, die aus an sich bekannten Leitblechen, Leitwalzen, Rollenbahnen oder Förderbändern, besteht. Eine solche Einrichtung wird z. B. auch bei der Herstellung von extrudierten Kunststoffschläuchen eingesetzt.

Danach wird der Schlauch, während er weiterhin vertikal von unten nach oben geführt wird, von den flüchtigen Anteilen der Beschichtungsflüssigkeit befreit, wobei sich ein gleichmäßiger, unterbrechungsfreier Filmüberzug auf der Schlauchinnenseite ausbildet. Hierzu durchläuft er beispielsweise einen üblichen Trockentunnel.

Anschließend, gegebenenfalls nach dem Abkühlen, z. B. durch ein Gebläse mit Kaltluft, wird der Schlauch, soweit erforderlich, wieder angefeuchtet, z. B. durch Besprühen mit Wasser, so daß der Schlauch dann einen Wassergehalt von 5 bis 20 Gew.% besitzt.

Danach folgt eine Einrichtung, die den Schlauch durch die vorhergehenden Dosier-, Trocken- und gegebenenfalls Befeuchtungs-Einrichtungen zieht und vorzugsweise flachlegt. Sie besteht zweckmäßig aus einem Quetschwalzenpaar, welches auf die Dicke der zu diesem Zeitpunkt fertiggestellten Innenbeschichtung keinen Einfluß mehr nehmen kann.

Das Verfahrenserzeugnis wird gewöhnlich zur Lagerung oder für den Transport auf eine Rolle aufgewickelt.

Die im unteren Teil des Schlauchs vorhandene Beschichtungsflüssigkeit wird in bevorzugter Ausführungsform am Zurückströmen in Richtung entgegen der Schlauchfortbewegung gehindert, indem man den mit Beschichtungsflüssigkeit gefüllten unteren Teil des Schlauchs über einen kurzen Abschnitt flach zusammenpreßt, wobei man vorzugsweise gleichzeitig den Schlauch in Richtung zur Dosiereinrichtung fördert. Das Zurückströmen der Beschichtungsflüssigkeit könnte z. b. durch den Stützgasdruck oberhalb des Spiegels der Beschichtungsflüssigkeit bewirkt werden. Für diesen Zweck verwendet man beispielsweise ein rotierbar ausgebildetes Quetschwalzenpaar, welches durch flaches Zusammenpressen des flüssigkeitsgefüllten Schlauchs sowohl das Zurückströmen der Beschichtungsflüssigkeit verhindert als auch den Schlauch fördert. Das Quetschwalzenpaar befindet sich vorzugsweise an dem von oben nach unten laufenden Schlauchteil vor dessen Umlenkung, sofern der untere mit Beschichtungsflüssigkeit gefüllte Schlauchteil die Form einer Schlaufe besitzt. In ganz besonders vorteilhafter Ausführungsform wird die Beschichtungsflüssigkeit nach Maßgabe ihres von der Schlauchfortbewegungsgeschwindigkeit und ihrer Konzentration abhängigen Verbrauchs infolge der Beschichtung der Schlauchinnenwand nachgefördert, wobei man den Spiegel der Beschichtungsflüssigkeit auf ein bestimmtes Niveau einstellt. Hierbei ist die Geschwindigkeit der in Schlauchfortbewegungsrichtung geförderten Beschichtungsflüssigkeit wesentlich geringer als die Geschwindigkeit der Schlauchbewegung.

Zur gleichzeitigen Nachförderung der Beschichtungsflüssigkeit unter Konstanthaltung des Niveaus ihres Spiegels wird eine Vorrichtung verwendet, wie sie in der DE-C-2 557 994, DE-C-2 659 000 oder DE-A-2 856 253 beschrieben ist.

Die Vorrichtung der DE-C-2 557 994 besteht aus zwei Walzensternen, an denen eine Reihe von drehbaren Walzen angeordnet sind, wobei jeder Walzenstern sich einerseits um seinen Mittelpunkt dreht und andererseits eine Pendelbewegung in Richtung zur Schlauchoberfläche ausführt.

Die aus der DE-C-2 659 000 bekannte Vorrichtung besteht aus zwei förderbandartigen Endlosbändern, die beide auf ihren Außenseiten sinusförmige Auswölbungen aufweisen. Diese Endlosbänder befördern den zwischen ihnen zusammengepreßten Schlauch, wobei in den von den Auswölbungen gebildeten Hohlräumen die Beschichtungsflüssigkeit in Richtung der Schlauchfortbewegung transportiert wird.

Die in der DE-A-2 856 253 beschriebene Vorrichtung zum gleichzeitigen längsweisen Fördern des Schlauchs in Richtung seiner Längsachse und Fördern der eingeschlossenen Beschichtungsflüssigkeit besteht aus zwei gegenüberliegenden, den Schlauch in Richtung seiner Längsachse anliegenden Fördereinheiten. Die erste Fördereinheit ist ein umlaufendes endloses Förderband, die zweite Fördereinheit hat die Form einer rotierenden zylindrischen Rolle, die beide auf ihren dem Schlauch anliegenden Oberflächen sinusförmige Auswölbungen aufweisen, welche den Schlauch in Abständen über seine gesamte Breite gegen das endlose Förderband anpressen und dabei den Schlauch in Abständen der Auswölbungen abquetschen. Beide Fördereinheiten werden mit gleicher Geschwindigkeit in Richtung der Schlauchfortbewegung angetrieben, wobei der Schlauch durch den Kontakt der beiden Fördereinheiten mit seinen Außenflächen fortbewegt wird. Die dabei jeweils in Schlauchabschnitten zwischen zwei benachbarten Schlauchzusammenquetschungen befindlichen Teilflüssigkeitsmengen werden in Richtung der Schlauchfortbewegung gefördert. Der Abstand zweier Schlauchzusammenquetschungen entspricht dem Abstand zweier benachbarter Auswölbungen.

Beide Fördereinheiten sind in der Weise zueinander angeordnet, daß der geringste Abstand zwischen ihren Oberflächen der doppelten Wandstärke des geförderten Schlauchs entspricht, so daß der Schlauch an diesen Stellen eng zusammengepreßt wird.

Das endlose Förderband ist vorteilhafterweise flexibel und besteht beispielsweise aus einem Material, das ihm hinreichende Flexibilität bei ausreichender Formbeständigkeit verleiht. Es besteht z. B. aus Gummi. Die zweite, zylinderförmige Fördereinheit ist dagegen formfest und besteht vorteilhaft aus Metall oder Kunststoff.

Die Förder- und Pumpvorrichtung wird vorzugsweise im unteren Schlauchteil in der Weise angeordnet, daß man den Schlauch in Form einer Schlaufe umlenkt, wobei diese Vorrichtung gleichzeitig zur zumindest partiellen Umlenkung des Schlauchs dient.

In Abwandlung zu der Vorrichtung der DE-A-2 856 253 zeigt das bevorzugt verwendete endlose Förderband eine plane Oberfläche, wobei zur exakten Dosierung vorzugsweise eine rotierende Dosierwalze vorgesehen ist, welche sich zwischen den Führungswalzen des Förderbandes befindet. Die geförderte Flüssigkeitsmenge wird durch die Einstellung der Hublänge der Dosierwalze, die in Richtung auf die zweite, zylinderförmige Fördereinheit gedrückt wird, bestimmt und ist stufenlos regulierbar. Die Hublänge der Dosierwalze ist z. B. mittels eines Anschlags einstellbar, gegen den die Halterung der Dosierwalze fahrbar ist. Die Höhe der Auswölbungen auf der Umfangsfläche der zylindrischen Rolle ist vorteilhaft 2 bis 10 mm, insbesondere 6 bis 10 mm, bei einem Durchmesser der zylindrischen Rolle von etwa 250 bis 500 mm.

Eine der beiden Führungswalzen des Förderbandes ist gegebenenfalls beweglich in Laufrichtung des Förderbandes angeordnet, so daß diese Führungswalze beim Eindrücken einer Erhebung der zylinderförmigen Fördereinheit in das Förderband in Richtung zur anderen Führungswalze bewegt wird. Ein Rückholmechanismus, z. B. in Form einer Feder, bringt diese Führungswalze in ihre Ausgangslage wieder zurück. Die zweite Führungswalze wird in diesem Fall angetrieben und liegt im Kontaktbereich mit dem Förderband reib- bzw. kraftschlüssig an. Beide Führungswalzen und die zweite, zylinderförmige Fördereinheit sind zentrisch drehbar auf Achswellen befestigt.

Diese bevorzugte Ausführungsform der Förder- und Pumpvorrichtung mit einem endlosen Förderband mit planer Oberfläche zeigt gegenüber den aus den drei Druckschriften bekannten Vorrichtungen verschiedene Vorteile. Das endlose Förderband läßt sich relativ einfach herstellen. Der Schlauch wird durch den Kontakt mit den beiden Fördereinheiten wesentlich weniger mechanisch beansprucht. Die geförderte Menge an Beschichtungsflüssigkeit läßt sich exakt einstellen, da nicht die Gefahr besteht, daß sich die Auswölbungen auf den Umfangsflächen der beiden Fördereinheiten während des Betriebs der Vorrichtung in ihrer Lage zueinander verschieben.

Die Erfindung wird anhand der Figuren 1 bis 3 näher erläutert.

Figur 1 zeigt eine vorteilhafte Ausführungsform der Förder- und Pumpvorrichtung.

In Figur 2 ist eine bevorzugte Ausbildung der Dosiereinrichtung abgebildet.

In Figur 3 ist der Verfahrensablauf der Innenbeschichtung dargestellt.

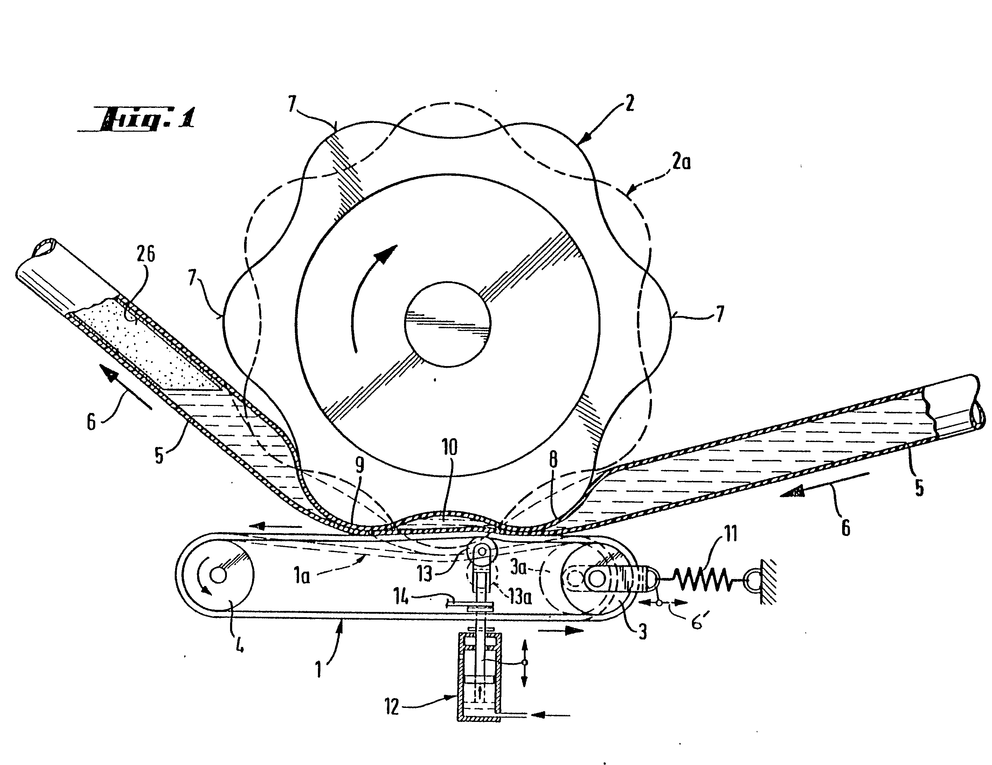

Die Förder- und Pumpvorrichtung der Fig. 1 besteht aus zwei gegenüberliegenden Fördereinheiten 1, 2. Die erste Fördereinheit ist ein endloses Band 1 aus elastischem Material mit im wesentlichen planer Oberfläche, welches über zwei im Abstand angeordneten Führungswalzen 3, 4 läuft ; die zweite Fördereinheit ist eine zylindrische Rolle 2, die auf ihrer dem Schlauch 5 anliegenden Oberfläche quer zur Laufrichtung (siehe Pfeile 6) sich erstreckende Profilierungen aufweist, deren Erhebungen 7 den Schlauch 5 gegen die plane Oberfläche des endlosen Bandes 1 in Abständen andrücken, wobei der Schlauch zwischen zwei benachbarten zusammengedrückten Flächen 8, 9 mit einer Menge 10 an Beschichtungsflüssigkeit gefüllt ist. Die Beschichtungsflüssigkeit besteht beispielsweise aus einer wäßrigen Dispersion eines zur Ausbildung einer Wasserdampfundurchlässigen Schicht geeigneten Vinylidenchlorid-Copolymerisats mit einem Gehalt von 25 Gew.% an Copolymerisat, der Schlauch ist beispielsweise ein faserverstärkter Cellulosehydratschlauch.

Die Führungswalze 3 ist in Laufrichtung 6' verschiebbar angeordnet. Sie wird durch das Zusammenpressen der beiden Fördereinheiten in Laufrichtung 6' verschoben und durch die Feder 11 in ihre Ausgangsstellung taktweise zurückgeholt.

Das Dosierorgan 12 besteht aus einer rotierenden Dosierwalze 13, die zur Feineinstellung der eingeschlossenen Flüssigkeitsmenge 10 dient. Hierzu wird sie gegen das Band 1 gedrückt, wobei die Hublänge durch den schematisch gezeichneten Anschlag 14 begrenzt und eingestellt wird.

Die gestrichelt gezeichnet Fördereinheiten 1a, 2a, Führungswalze 3a und Dosierwalze 13a zeigen die Lage dieser Vorrichtungteile zeitverschoben zwischen identischen Lagen, wie sie in der Figur als 1, 2, 3 und 13 bezeichnet und mit durchgezogenen Linien dargestellt sind.

Die Antriebsorgane für die Fördereinheiten 1, 2 sowie Halterungen werden aus Gründen der besseren Übersichtlichkeit nicht gezeigt.

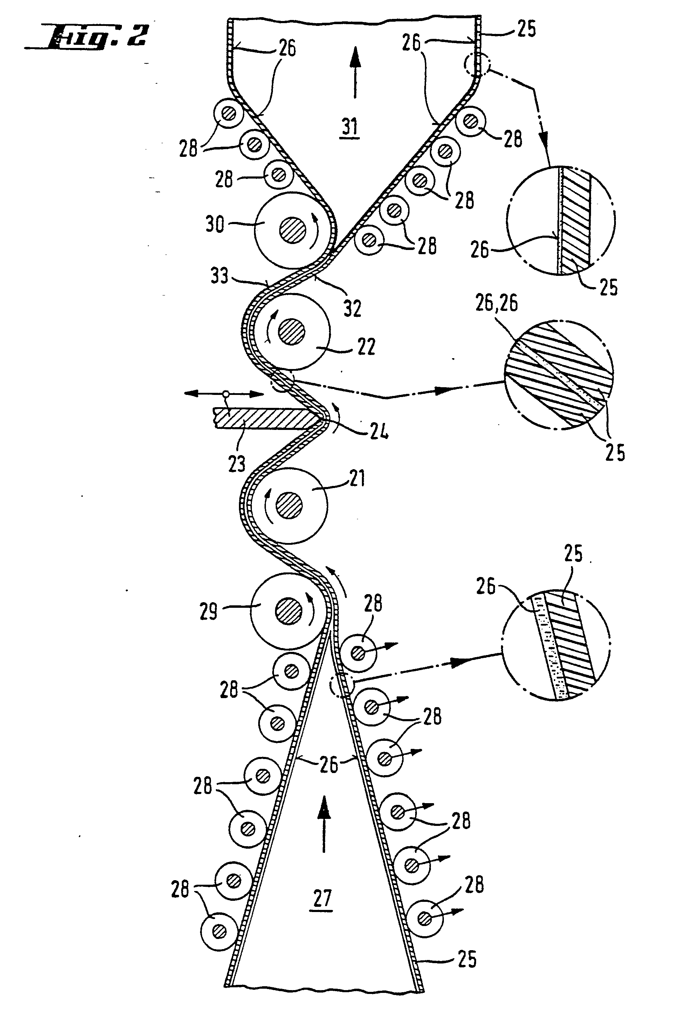

Die Dosiereinrichtung, wie sie in der Fig. 2 abgebildet ist, besteht aus zwei Abstreifern in Form von Walzen 21, 22 mit planer oder gerillter Oberfläche und einem Abstreifer in Form eines Rakels 23 mit abgerundeter Kontaktfläche 24, die in Laufrichtung des Schlauchs angeordnet sind. Der Schlauch 25 mit relativ dicker Innenchicht aus Beschichtungsflüssigkeit 26 ist in seinem Hohlraum 27 mit Stützgas gefüllt. Er wird mit rollenförmigen rotierenden Leitelementen 28, die jeweils in zwei Walzenreihen vor und nach der Dosiereinrichtung angeordnet sind, faltenfrei allmählich vom aufgeblasenen in den flachgelegten Zustand bzw. vom flachgelegten in den aufgeblasenen Zustand übergeführt. Er liegt eng an der ersten Abstreiferwalze 29 und letzten Abstreiferwalze 30 an, so daß das Stützgas aus dem Hohlraum 27 oder 31 unter seinem Druck nicht in die Dosiereinrichtung gelangen kann, und durchläuft mäanderförmig die Dosiereinrichtung, wobei seine beiden flachgelegten Oberflächen 32, 33 abwechselnd in engen Kontakt mit den Abstreifern 21, 22, 23, 29, 30 treten.

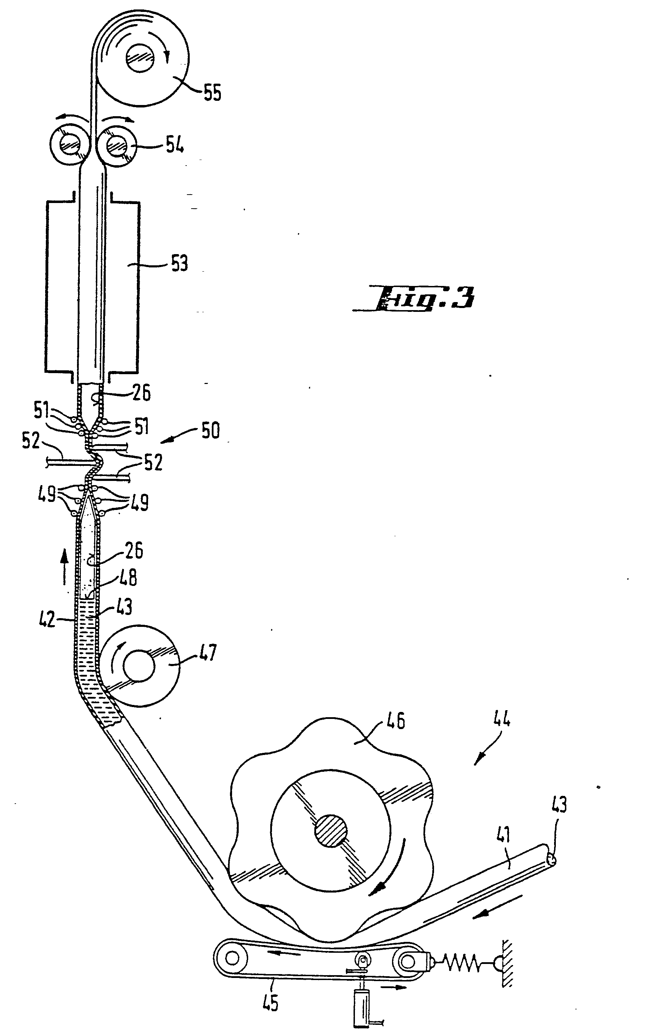

Die in Fig. 3 dargestellte Anordnung besteht aus schräg von oben nach unten und von unten nach oben verlaufenden Schlauchteilen 41 und 42, welche mit Beschichtungsflüssigkeit 43 gefüllt sind. Die nur schematisch gezeigte, als Umlenkungsorgan dienende Förder- und Pumpvorrichtung 44, besteht aus zwei Fördereinheiten 45, 46. Sie fördert den Schlauch z. B. mit einer Geschwindigkeit von 15 bis 30 m/min. und dient außerdem zur Nachförderung der Beschichtungsflüssigkeit vom Schlauchteil 41 in den Schlauchteil 42 unter Konstanthaltung des Niveaux des Flüssigkeitsspiegels 48. 47 ist eine Walze zur weiteren partiellen Umlenkung des Schlauchteils 42. Oberhalb des Spiegels 48 der Beschichtungsflüssigkeit 43 ist der Schlauch mit Stützgas aufgeblasen und wird mit Leitwalzen 49 vor der Dosiereinrichtung 50 allmählich flachgelegt und mit Leitwalzen 51 anschließend in den aufgeblasenen Zustand zurückgeführt. Die Dosiereinrichtung 50 besteht aus nur schematisch gezeigten Abstreifern in Form von Rakeln 52. Der innenbeschichtete Schlauch durchläuft danach eine Trockenvorrichtung 53 und wird anschließend mit dem Quetschwalzenpaar 54 flachgelegt und mit der Rolle 55 aufgewickelt. Das Quetschwalzenpaar 54 dient auch zum Ziehen des Schlauchs durch die Dosiereinrichtung 50, wobei die Zugspannung konstant gehalten werden muß, um eine gleichmäßige Beschichtung zu erreichen. Je höher die Zugspannung gewählt wird, desto geringer ist die Beschichtungsdicke. Für eine Beschichtung eines faserverstärkten Cellulosehydratschlauchs mit einem Vinylidenchlorid-Copolymerisat, wie bei der Beschreibung der Fig. 1 genannt, mit einem Flächengewicht von 7 bis 12 g/m² ist beispielsweise eine Zugspannung von 130 bis 180 N erforderlich. Die geeignete Zugspannung kann durch einfache Vorversuche ermittelt werden.

**Patentansprüche**

1. Verfahren zur Innenbeschichtung eines insbesondere faserverstärkten Schlauchs auf Basis von Cellulosehydrat, bei dem der mit einer Menge Beschichtungsflüssigkeit (43) im unteren Teil gefüllte Schlauch (42) mit stetiger Geschwindigkeit längsaxial vertikal von unten nach oben fortbewegt wird, der Schlauch (42) oberhalb des Spiegels der Beschichtungsflüssigkeit (43) mit Stützgas gefüllt ist und auf seiner Innenseite eine relativ dicke Schicht aus Beschichtungsflüssigkeit (26) aufweist, der mit Stützgas gefüllte Schlauch (42) in den flachgelegten Zustand überführt und im flachgelegten Zustand durch eine Dosiereinrichtung (50) geführt wird, die so eingestellt ist, daß die Hauptmenge der auf der Innenseite des flachgelegten Schlauchs (42) vorhandenen Beschichtungsflüssigkeit (26) zurückgehalten wird und ein Film von nur geringer Dicke aus Beschichtungsflüssigkeit (26) auf der Innenseite des aus der Dosiereinrichtung (50) austretenden Schlauchs (42) ausgebildet wird, der Schlauch (42) anschließend erneut mit Stützgas gefüllt weiterhin vertikal in Richtung von unten nach oben geführt und der Einwirkung von Wärme unterworfen wird, wobei die flüchtigen Anteile der Beschichtungsflüssigkeit (26) entfernt werden und sich ein Überzug auf der Schlauchinnenseite ausbildet, und gegebenenfalls der Schlauch (42) nach dem Trocknen mit Wasser befeuchtet wird, wobei der flachgelegte Schlauch (42) in der Weise durch die Dosiereinrichtung (50) geführt wird, daß er mit seinen beiden äußeren Oberflächen (32, 33) abwechselnd in engen Kontakt mit mindestens zwei in Laufrichtung des Schlauchs (42) angeordneten Abstreifern (52) gebracht wird und um diese Abstreifer (52) mäanderförmig geführt wird, die abwechselnd an den beiden äußeren Oberflächen (32, 33) des flachgelegten Schlauchs (42) eng anliegen, wobei die mit den Schlauchoberflächen (32, 33) in Kontakt tretenden Oberflächen (24) der Abstreifer (52) in Schlauchlängsrichtung abgerundet sind und der Anpreßdruck, unter dem die äußeren Schlauchoberflächen (32, 33) auf den Oberflächen (24) des ersten und des letzten Abstreifers (52) aufliegen, größer ist als der Innendruck in den mit Stützgas gefüllten Schlauchhohlräumen (27, 31) unterhalb und oberhalb der Dosiereinrichtung (50).

2. Verfahren nach Anspruch 1, dadurch gekennzeichnet, daß einer oder mehrere der Abstreifer (52), insbesondere der erste und/oder der letzte, die Form einer vorzugsweise rotierbaren Walze (29, 30) aufweisen.

3. Verfahren nach Anspruch 1 oder 2, dadurch gekennzeichnet, daß die Beschichtungsflüssigkeit (43) stetig in Abhängigkeit vom Verbrauch nachgefördert wird.

4. Verfahren nach einem der Ansprüche 1 bis 3, dadurch gekennzeichnet, daß man, zur Verhinderung des Zurückpressens der Beschichtungsflüssigkeit (43) in Richtung entgegen der Schlauchfortbewegung, den mit Beschichtungsflüssigkeit (43) gefüllten Teil (41) des Schlauchs, vorzugsweise unter gleichzeitiger Förderung des Schlauchs, über einen kurzen Abschnitt zusammenpreßt, insbesondere partiell zusammenpreßt unter gleichzeitiger in Abhängigkeit vom Verbrauch erfolgender Förderung der im Schlauchinneren befindlichen Beschichtungsflüssigkeit (43) in Richtung zu der Dosiereinrichtung (50).

5. Verfahren nach einem der Ansprüche 1 bis 4, dadurch gekennzeichnet, daß der mit einer Menge Beschichtungsflüssigkeit (43) gefüllte untere Schlauchteil in Form einer Schlaufe geführt wird, wobei der Schlauch (41, 42) zunächst von oben nach unten geführt, umgelenkt und dann vertikal von unten nach oben fortbewegt wird.

6. Anordnung zur Durchführung des Verfahrens nach einem der Ansprüche 1 bis 5, bestehend

a) gegebenenfalls aus einer Vorrichtung zum längsweisen Fördern des Schlauchs (5) und vorzugsweise gleichzeitigem Pumpen der Beschichtungsflüssigkeit (43) in dem Schlauch (5) in Richtung seiner Längsachse, bestehend aus zwei gegenüberliegenden, auf den Außenseiten des Schlauchs (5) anliegenden, vorzugsweise den Schlauch quer zu seiner Längsachse in Flächen (8, 9) über seine gesamte Breite in Abständen zusammenpressenden, in Richtung der Schlauchfortbewegung mit gleicher Geschwindigkeit rotierenden antreibbaren Fördereinheiten (1, 2), angeordnet im unteren, mit Beschichtungsflüssigkeit (43) gefüllten Schlauchteil,

b) aus nachfolgenden oberhalb des Spiegels (48) der Beschichtungsflüssigkeit (43) angeordneten Einrichtungen (28, 49), die den mit einer relativ dicken Schicht aus Beschichtungsflüssigkeit (26) auf seiner Innenseite beschichteten Schlauch (25) unter Faltenbildung verhindernden Bedingungen vom mit Stützgas aufgeblasenen Zustand allmählich in den im wesentlichen flachgelegten Zustand überführen,

c) aus einer nachfolgenden Dosiereinrichtung (50) oberhalb der vorhergehenden Einrichtungen, umfassend mindestens zwei in Laufrichtung des Schlauchs (25) angeordnete Abstreifer in Form von Walzen (21, 22, 29, 30) und/oder Rakeln (23) mit in Laufrichtung des Schlauchs (25) gebogenen Oberflächen (24), mit denen die beiden Oberflächen (32, 33) des flachgelegten, mäanderförmig um die Abstreifer geführten Schlauchs (25) abwechselnd in engen Kontakt treten, zum Zurückhalten der Hauptmenge an Beschichtungsflüssigkeit (26) und zur Ausbildung eines Films geringer Dicke aus Beschichtungsflüssigkeit (26) auf der Innenseite des aus der Dosiereinrichtung (50) austretenden Schlauchs,

d) einer nachfolgenden Trockeneinrichtung (53) zur Entfernung der flüchtigen Anteile der Beschichtungsflüssigkeit (26) und zur Ausbildung eines Überzugs auf der Schlauchinnenseite und gegebenenfalls einer Sprüheinrichtung zur Befeuchtung des Schlauchs mit Wasser nach der Trockeneinrichtung (53),

e) einer nach der Trockeneinrichtung (53) folgenden Einrichtung zum Ziehen des Schlauchs in vertikaler Richtung durch die Dosiereinrichtung (50) und Trockeneinrichtung (53), insbesondere in Form eines Quetschwalzenpaares (54).

7. Anordnung nach Anspruch 6, bei der die erste der zwei gegenüberliegenden Fördereinheiten (1, 2) ein endloses Förderband (1) ist, welches über mindestens zwei im Abstand angeordneten Führungswalzen (3, 4) läuft, wobei gegebenenfalls eine der Führungswalzen (3) schiebebeweglich in Laufrichtung des Förderbandes (1) angeordnet ist, und die zweite Fördereinheit (2) die Form einer zylindrischen Rolle (2) aufweist, wobei die erste Fördereinheit (1) eine im wesentlichen plane Oberfläche besitzt und die zweite Fördereinheit (2) auf ihrer dem Schlauch anliegenden Oberfläche quer zur Laufrichtung sich erstreckende Profilierungen aufweist, deren Erhebungen (7) den Schlauch (5) gegen die plane Oberfläche der angrenzenden ersten Fördereinheit (1) andrücken, wobei der Schlauch (5) zwischen zwei benachbarten zusammengedrückten Flächen (8, 9) mit Beschichtungsflüssigkeit (10) gefüllt ist.

8. Anordnung nach Anspruch 7, dadurch gekennzeichnet, daß sich zwischen den beiden Führungswalzen (3, 4) des Förderbandes (1) eine rotierende Dosierwalze (13) befindet, deren Durchmesser kleiner ist als der gegenseitige Abstand der vorzugsweise sinusförmigen Erhebungen (7) der zweiten Fördereinheit (2), wobei die Dosierwalze (13) zur Dosierung der geförderten Flüssigkeitsmenge (10) das auf dem endlosen Förderband aufliegende Schlauchteil, im Bereich zwischen zwei benachbarten Erhebungen (7) der zweiten Fördereinheit (2), in Richtung zur Umfangsfläche der zweiten Fördereinheit (2) bis auf einen einstellbaren Abstand zwischen den beiden Fördereinheiten (1, 2) drückt.

9. Anordnung nach einem der Ansprüche 6 bis 8, dadurch gekennzeichnet, daß in Laufrichtung zur und vor der Dosiereinrichtung (50) angeordnete rollen-, blatt- oder bandförmige Leit-, Form- oder Förderelemente (28) zur faltenfreien Flachlegung des Schlauchs (25) vorhanden sind.

10. Anordnung nach einem der Ansprüche 6 bis 9, dadurch gekennzeichnet, daß wenigstens einer der Abstreifer, insbesondere der erste (29) und letzte (30), die Form einer vorzugsweise rotierbaren, gegebenenfalls antreibbaren, Rolle hat.

11. Anordnung nach einem der Ansprüche 6 bis 10, dadurch gekennzeichnet, daß wenigstens einer der Abstreifer, insbesondere der mittlere (23), bei einer ungeraden Anzahl von Abstreifern, die Form eines Rakelmessers mit abgerundeter Kontaktfläche (24) aufweist.

**Claims**

1. Process for internally coating a tubing based on cellulose hydrate, which is particularly fiber-reinforced, the process comprising conveying the tubing (42) which is filled with a quantity of coating liquid (43) in its lower portion, at a constant speed vertically upwards in the direction of its longitudinal axis, the tubing (42) being filled with a support gas above the level of the coating liquid (43) and carrying a relatively thick layer of coating liquid (26) on its inside surface, converting the tubing (42) which is filled with support gas, to a laid-flat state and passing the flattened tubing through a metering device (50) which is so adjusted that the major quantity of the coating liquid (26) present on the inside surface of the laid-flat tubing (42) is retained and a thin film on the coating liquid (26) is formed on the inside surface of the tubing (42) issuing from the metering device (50), then guiding the tubing (42), which is again filled with support gas, further vertically upwards and subjecting it to the action of heat, so that the volatile constituents of the coating liquid (26) are expelled and a coating is formed on the inside surface of the tubing, and optionally moistening the tubing (42) with water after drying, the laid-flat tubing (42) being passed through the metering device (50) in such a way that its two outside surfaces (32, 33) are alternately brought into close contact with at least two wipers (52) arranged in the direction of travel of the tubing (42) guided in a meandering course around these wipers (52) which alternately lie closely against the two outside surfaces (32, 33) of the flattened tubing (42), the surfaces (24) of the wipers (52), which come into contact with the tubing surfaces (32, 33) being rounded in the longitudinal direction of the tubing and the contact pressure exerted by the outside surfaces (32, 33) of the tubing on the surfaces (24) of the first and the last wiper (52) being greater than the internal pressure in the tubing cavities (27, 31) upstream and downstream of the metering device (50), which are filled with the support gas.

2. A process as claimed in claim 1, wherein one or several of the wipers (52), in particular the first and/or the last, has/have the form of a preferably rotatable roller (29, 30).

3. A process as claimed in claim 1 or claim 2, wherein the coating liquid (43) is constantly replenished depending on the consumption thereof.

4. A process as claimed in any of claims 1 to 3, wherein the coating liquid (43) is prevented from being pressed back, counter to the direction of travel of the tubing, by compressing the portion (41) of the tubing which is filled with coating liquid (43) over a short distance, while preferably simultaneously transporting the tubing, particularly by partially compressing the tubing and simultaneously conveying the coating liquid (43) contained inside the tubing in the direction of the metering device (50), depending on the consumption of the coating liquid.

5. A process as claimed in any of claims 1 to 4, wherein the lower portion of the tubing, which is filled with a quantity of coating liquid (43), is guided in the form of a loop, in such a way that the tubing (41, 42) is first guided in the downward direction, is deflected and then moved vertically upwards.

6. An arrangement for carrying out the process according to any of claims 1 to 5, comprising

a) optionally, a device for transporting the coated tubing (5) in the longitudinal direction and, preferably, simultaneously pumping the coating liquid (43) contained in the tubing (5) in the direction of the longitudinal axis thereof, the device comprising two drivable conveyer units (1, 2) which rotate at the same speed in the direction of travel of the tubing and are arranged opposite to one another in the region of the lower portion of the tubing, which is filled with coating liquid (43), the two conveyer units being in contact with the outsides of the tubing (5) and preferably compressing the tubing in intervals over its entire width and along linear zones (8, 9) extending transversely to the longitudinal axis of the tubing ;

b) elements (28, 49) which are disposed above the level (48) of the coating liquid (43) and by which the tubing (25) coated with a relatively thick layer of coating liquid (26) on its inside surface is, gradually and under conditions which prevent the formation of folds, converted from the state in which it is filled with support gas to a substantially laid-flat state ;

c) a metering device (50) above the preceding elements, including at least two wipers arranged in the direction of travel of the tubing (25) and having the form of rollers (21, 22, 29, 30) and/or doctor blades (23), the surfaces (24) of which are curved in the direction of travel of the tubing (25) and which are alternately closely contacted by the two surfaces (32, 33) of the laid-flat tubing (25) which is guided around the wipers in a meandering course, the metering device (50) serving to retain the major quantity of the coating liquid (26) and to form a thin film of the coating liquid (26) von the inside surface of the tubing issuing from the metering device (50) ;

d) a downstream drying unit (53) for removing the volatile constituents of the coating liquid (26) and for forming a coating on the inside surface of the tubing and, optionally, a spraying device for moistening the tubing with water downstream of the drying unit (53) ; and

e) a device which follows the drying unit (53) and has, in particular, the form of a pair of squeeze rollers (54), for pulling the tubing in a vertical direction through the metering device (50) and the drying unit (53).

7. An arrangement as claimed in claim 6, in which the first of the two conveyer units (1, 2) disposed opposite to one another, is an endless conveyer belt (1) running over at least two guide rollers (3, 4) which are disposed in spaced relationship with respect to one another, one of the guide rollers (3) optionally being arranged so as to be slideable in the travelling direction of the conveyer belt (1) and the second conveyer unit (2) has the form of a cylindrical roller (2), the first conveyer unit (1) possessing a substantially planar surface and the second conveyer unit (2) showing a profile on its surface contacting the tubing, the profile extending transversely to the direction of travel and its elevations (7) urging the tubing (5) against the planar surface of the adjacent first conveyer unit so that the tubing (5) enclosed between two neighboring compressed zones (8, 9) is filled with coating liquid (10).

8. An arrangement as claimed in claim 7, wherein a rotating metering roller (13) which is present between the two guide rollers (3, 4) of the conveyer belt (1), has a diameter which is smaller than the mutual distance to the preferably sinusoidal elevations (7) of the second conveyer unit (2) and, in order to meter the conveyed quantity of liquid (10), the metering roller (13) urges the tubing portion lying on the endless conveyer belt towards the circumferential surface of the second conveyer unit (2) in the area between two neighboring elevations (7) of the second conveyer unit (2), up to an adjustable distance between the two conveyer units (1, 2).

9. An arrangement as claimed in any of claims 6 to 8, wherein guiding, shaping or conveying elements (28) in the form of rollers, sheets or webs, which are arranged in the direction of travel towards the metering device (50) and upstream thereof, are present for the creasefree flattening of the tubing (25).

10. An arrangement as claimed in any of claims 6 to 9, wherein at least one of the wipers, particularly the first (29) and the last (30), has/have the form of a preferably rotatable, optionally drivable roller.

11. An arrangement as claimed in any of claims 6 to 10, wherein at least one of the wipers, particularly the wiper (23) arranged in the middle, in the case of an uneven number of wipers, has the form of a doctor blade with a rounded contact surface (26).

**Revendications**

1. Procédé de revêtement intérieur d'un tuyau souple à base d'hydrate de cellulose, notamment renforcé de fibres, selon lequel on fait avancer, à vitesse constante et suivant son axe longitudinal, verticalement et de bas en haut, le tuyau souple (42) rempli dans sa partie inférieure d'une quantité de liquide de revêtement (43), on remplit de gaz de soutien, au-dessus du niveau libre de ce liquide de revêtement (43), le tuyau (42) qui présente sur sa face intérieure une couche relativement épaisse de liquide de revêtement (26), on fait passer ce tuyau (42) rempli de gaz de soutien à l'état mis à plat et on le guide dans cet état à travers un dispositif de dosage (50) qui est réglé de manière telle que la quantité principale du liquide de revêtement (26) qui est présent sur la face intérieure du tuyau à plat (42) se trouve retenue, tandis qu'il se forme sur la face intérieure du tuyau (42) qui sort du dispositif de dosage (50) un film qui ne présente qu'une faible épaisseur de liquide de revêtement (26) et on guide encore verticalement, suivant la direction de bas en haut, ce tuyau souple (42) à nouveau rempli de gaz de soutien, en le soumettant à l'action de la chaleur de manière à séparer les fractions volatiles du liquide de revêtement (26), un revêtement se formant alors sur la face intérieure du tuyau (42) que l'on humidifie éventuellement à l'aide d'eau après le séchage, procédé dans lequel on guide le tuyau mis à plat (42) à travers le dispositif de dosage (50) de manière telle qu'il se trouve amené, par ses deux surfaces extérieures (32, 33), alternativement en contact étroit avec au moins deux organes de raclage (52) qui sont disposés suivant la direction de déplacement du tuyau (42) et qu'il est guidé en forme de méandres autour de ces organes de raclage (52) qui s'appuient étroitement, alternativement sur les deux surfaces extérieures (32, 33) de ce tuyau mis à plat (42), les surfaces (24) de ces organes de raclage (52) qui viennent en contact avec les surfaces de tuyau (32, 33) étant arrondies suivant la direction longitudinale du tuyau et la pression d'application, sous laquelle ces surfaces extérieures de tuyau (32, 33) s'appuient sur les surfaces (24) du premier et du dernier organes de raclage (52), étant plus élevée que la pression intérieure régnant dans les cavités du tuyau (27, 31) qui sont situées au-dessous et au-dessus du dispositif de dosage (50) et sont remplies de gaz de soutien.

2. Procédé selon la revendication 1, caractérisé en ce que un ou plusieurs des organes de raclage (52), de préférence le premier et/ou le dernier, présentent la forme d'un cylindre (29, 30) de préférence rotatif.

3. Procédé selon la revendication 1 ou 2, caractérisé en ce qu'on alimente constamment en liquide de revêtement (43) en fonction de la consommation.

4. Procédé selon l'une quelconque des revendications 1 à 3, caractérisé en ce que, pour empêcher un refoulement du liquide de revêtement (43) dans la direction opposée au sens de déplacement du tuyau, on comprime sur un court tronçon la partie (41) du tuyau qui est remplie de ce liquide de revêtement (43), de préférence avec un avancement simultané du tuyau, en la comprimant de préférence partiellement avec un avancement simultané, survenant en fonction de la consommation, du liquide de revêtement (43) qui se trouve à l'intérieur du tuyau, en direction du dispositif de dosage (50).

5. Procédé selon l'une quelconque des revendications 1 à 4, caractérisé en ce que la partie inférieure du tuyau qui est remplie d'une certaine quantité de liquide de revêtement (43) se trouve guidée suivant la forme d'une boucle, le tuyau souple (41, 42) étant d'abord guidé de haut en bas, puis dévié, et ensuite envoyé verticalement du bas vers le haut.

6. Installation pour la mise en œuvre du procédé selon l'une quelconque des revendications 1 à 5, constituée :

a) éventuellement d'un dispositif permettant de faire avancer longitudinalement le tuyau souple (5) et de préférence de pomper simultanément le liquide de revêtement (43) dans ce tuyau (5) suivant la direction de son axe longitudinal, ce dispositif étant constitué par deux unités d'avancement (1, 2) qui sont disposées sur la partie inférieure de tuyau remplie de liquide de revêtement (43), sont disposées l'une en regard de l'autre, s'appuient sur les faces extérieures du tuyau (5), compriment de préférence ce tuyau en des emplacements espacés, transversalement à son axe longitudinal et suivant des surfaces (8, 9) en s'étendant sur toute sa largeur, et peuvent être entraînées en rotation à la même vitesse suivant la direction du mouvement d'avance du tuyau,

b) de dispositifs (28, 49) disposés à la suite et situés au-dessus du niveau libre (48) du liquide de revêtement (43), et qui font passer progressivement de l'état gonflé à l'aide d'un gaz de soutien à l'état sensiblement mis à plat, sous des conditions qui empêchent la formation de plis, le tuyau (25) qui est revêtu sur sa face intérieure d'une couche relativement épaisse de liquide de revêtement (26),

c) d'un dispositif de dosage (50) disposé à la suite et situé au-dessus des dispositifs précédents, et qui comprend au moins deux organes de raclage disposés suivant le sens de déplacement du tuyau (25) et se présentant sous la forme de rouleaux (21, 22, 29, 30) et/ou de racloirs (23) présentant des surfaces (24) qui sont incurvées suivant le sens de déplacement du tuyau (25) et en contact étroit desquelles viennent alternativement les deux surfaces (32, 33) du tuyau (25) qui est mis à plat et guidé en forme de méandres autour de ces organes de raclage, afin de retenir la quantité principale de liquide de revêtement (26) et de former un film de liquide (26) de faible épaisseur sur la face intérieure du tuyau qui sort du dispositif de dosage (50),

d) d'un dispositif de séchage (53) disposé à la suite et permettant de séparer les fractions volatiles du liquide de revêtement (26) et de former un revêtement sur la face intérieure du tuyau, et éventuellement d'un dispositif de pulvérisation pour humidifier le tuyau à l'aide d'eau en aval de ce dispositif de séchage (53),

e) et d'un dispositif disposé à la suite du dispositif de séchage (53) pour tirer le tuyau suivant une direction verticale à travers le dispositif de dosage (50) et le dispositif de séchage (53), ce dispositif se présentant en particulier sous la forme d'une paire de cylindres de serrage (54).

7. Installation selon la revendication 6, dans laquelle la première des deux unités d'avancement disposées en regard l'une de l'autre (1, 2) est un convoyeur à bande sans fin (1) qui passe sur au moins deux cylindres de guidage (3, 4) disposés à une certaine distance l'une de l'autre, l'un de ces cylindres de guidage (3) étant éventuellement disposé de manière mobile en translation suivant la direction de déplacement du convoyeur à bande (1), tandis que la seconde unité d'avancement (2) présente la forme d'un rouleau cylindrique (2), la première unité d'avancement (1) présentant une surface sensiblement plane et la seconde unité d'avancement (2) présentant, sur sa surface qui s'appuie sur le tuyau, des formes profilées qui s'étendent transversalement à la direction de déplacement et dont les surélévations (7) appliquent le tuyau (5) contre la surface plane de la première unité d'avancement (1) adjacente, le tuyau souple (5) étant rempli de liquide de revêtement (10) entre deux surfaces (8, 9) comprimées voisines.

8. Installation selon la revendication 7, caractérisée en ce que, entre les deux cylindres de guidage (3, 4) du convoyeur à bande (1), se trouve disposé un cylindre de dosage rotatif (13) dont le diamètre est plus petit que l'écartement mutuel des surélévations de préférence sinusoïdales (7) de la seconde unité d'avancement (2), le cylindre de dosage (13) repoussant, en vue du dosage de la quantité propulsée de liquide (10), la partie de tuyau qui repose sur le convoyeur à bande sans fin, dans la zone située entre deux surélévations voisines (7) de la seconde unité d'avancement (2), en direction de la surface périphérique de cette seconde unité (2), à l'écart réglable près entre les deux unités d'avancement (1, 2).

9. Installation selon l'une quelconque des revendications 6 à 8, caractérisée en ce qu'il est prévu, en vue de la mise à plat exempte de plis du tuyau (25), des éléments de guidage, de mise en forme ou d'avancement (28) ayant la forme de galets, de plaques ou de bandes, et disposés suivant la direction de déplacement vers et avant le dispositif de dosage (50).

10. Installation selon l'une quelconque des revendications 6 à 9, caractérisée en ce qu'au moins l'un des organes de raclage, de préférence le premier (29) ou le dernier (30), présente la forme d'un rouleau de préférence rotatif et éventuellement pouvant être entraîné.

11. Installation selon l'une quelconque des revendications 6 à 10, caractérisée en ce qu'au moins l'un des organes de raclage, de préférence l'intermédiaire (23) dans le cas d'un nombre impair d'organes, présente la forme d'une lame de raclage à surface de contact arrondie (24).

**Fig. 1**

0 062 812

**Fig. 2**

Fig.3